# EUROPEAN PATENT APPLICATION

(11) **EP 0 860 620 A2**
(43) Date of publication of application: **26.08.1998**
(21) Application number: 98301071.1
(22) Date of filing: 13.02.1998
(51) Int. Cl.: F16C 33/78

(54) **Polymer bearing seal and sealed bearing**

(30) Priority: 21.02.1997 US 803212
(71) Applicant: THE TORRINGTON COMPANY, Torrington, Connecticut 06790 (US)
(72) Inventor: Waskiewicz, Walter P., Bristol, CT 06010 (US)
(74) Representative: Feakins, Graham Allan

(57) **Abstract**

A polymer ring has a circumferential mounting flange (16) and an annular end wall (20) extending radially inwardly and axially inwardly therefrom, providing a conically convex side (22) and a conically concave side (24). An annular seal lip (26) projects from a radially inner portion of the end wall to engage an annular radially outwardly curved surface (30) of the bearing inner ring (14) after insertion of the seal into the bearing. An annular rib (32) located on the convex side between the end wall and the mounting flange, and an annular rib groove (34) on the concave side opposite the annular rib, allow the polymer ring to collapse radially as the end wall is deflected axially outwardly to a more radial orientation during insertion.

## Description

This invention relates generally to bearing seals for use in sealed bearings with rolling elements and, more particularly, to a bearing seal made of polymer.

Typically, bearing seals are mounted on a bearing outer ring and have a flexible lip extending to a bearing inner ring. Conventional bearing seals are made of synthetic rubber moulded around metal washer support inserts. This construction and fabrication method results in relatively costly bearing seals, increasing the cost of the sealed bearing.

Various bearing seals have been proposed, to be made of a stiff, homogeneous material such as, for example , a fibre - reinforced thermoplastic. However, due to manufacturing tolerances and differences in rates of expansion between such seals and the bearing inner and outer rings, such seals fail to seal effectively when the sealed bearing undergoes a wide range of temperature.

According to the present invention, there is provided a polymer bearing seal for insertion between an outer ring and an inner ring of a bearing, the seal comprising a polymer ring having a mounting flange along the polymer ring's outer circumference for mounting engagement with a seal groove of the outer ring of the bearing, characterised in that the polymer ring has an annular end wall extending radially inwardly and axially inwardly such that the end wall provides a conically convex side to be directed toward an axial centre of the bearing and a conically concave side to be directed away from the axial centre of the bearing, the polymer ring having an annular first seal lip projecting from a radially inner portion of the end wall for engagement with an annular radially outwardly curved surface of the inner ring of the bearing after insertion of the seal into the bearing, and the polymer ring having an annular rib located on the convex side between the end wall and the mounting flange, and an annular rib groove on the concave side opposite the annular rib, such that the polymer ring may collapse radially as the end wall is deflected axially outwardly to a more radial orientation.

The invention also extends to a sealed bearing incorporating a polymer bearing seal essentially as just defined.
For a better understanding of the invention and to show how the same may be carried into effect, reference will now be made, by way of example to the accompanying drawings, in which:-
Fig. 1 is a cross sectional view illustrating an embodiment of sealed bearing;
Fig. 2 is a cross sectional view of a polymer bearing seal of the sealed bearing of Fig. 1 prior to insertion into the sealed bearing, with an optional radial rib indicated by phantom lines;
Fig. 3 is an axial end view of the polymer bearing seal of Fig. 2; and
Fig. 4 is an axial end view of a portion of an alternative embodiment of polymer bearing seal.

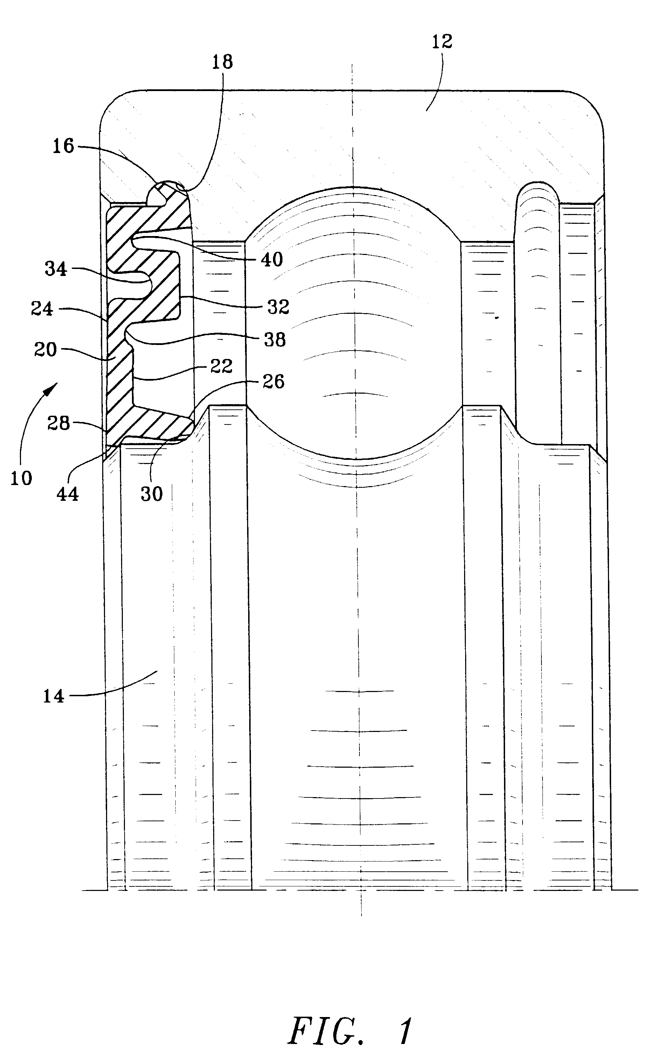

Referring to the drawings, Figures 1 to 3 illustrate a polymer bearing seal 10, both after and before insertion between a bearing outer ring 12 and a bearing inner ring 14. The seal 10 comprises a polymer ring having a mounting flange 16 along the polymer ring's outer circumference for mounting engagement with a seal groove 18 of the bearing outer ring 12.

The polymer ring has an annular end wall 20 extending radially inwardly and axially inwardly from the mounting flange 16 to provide a conically convex side 22 to be directed toward an axial centre of the bearing and a conically concave side 24 to be directed away from the axial centre of the bearing. Angle "A" prior to insertion in the bearing is dependent upon the size of the bearing, a larger angle being desirable as the size of the bearing increases. For example, for bearings with an outer ring diameter increasing from 1.5 inches to 5 inches (3.81 - 12.7 cm), angle "A" would typically increase from approximately 7 degrees to 15 degrees.

The polymer ring has an annular first seal lip 26 projecting from a radially inner portion 28 of the end wall 20 for engagement with an annular radially outwardly curved surface 30 of the bearing inner ring 14. The curved surface 30 may be a radiussed surface on a shoulder of the bearing inner ring 14, as shown, with a concave circular cross-section, or may be otherwise curved to provide a smooth concave cross-section. This configuration allows the first seal lip 26 to travel up and down the curved surface 30 to accommodate manufacturing tolerances, thermal expansion differences between the polymer bearing seal 10 and the bearing inner and outer rings 12 and 14, and ageing and wear of those components.

The polymer ring includes an annular rib 32 located on the convex side 22 between the conical end wall 20 and mounting flange 16, and an annular rib groove 34 on the concave side 24 opposite the annular rib 32. As a result of this configuration, the polymer ring may collapse radially as the conical end wall 20 is deflected axially outwardly to a more radial orientation due to engagement of the curved surface 30 by the first seal lip 26 during insertion of polymer bearing seal into the bearing. The annular rib groove 34 facilitates this radial collapsing by narrowing. The annular rib 32 may be generally square, as shown, or may a rounded configuration.

To facilitate the radial collapsing further, the annular rib groove 34 may extend axially into the polymer ring a depth greater than the axial thickness of the conical end wall 20 such that the annular rib groove 34 penetrates the annular rib 32, as shown. Optionally, the annular groove 34 may be interrupted at a plurality of points 36, regularly spaced about the circumference of the polymer ring, such that the annular rib 32 is stiffened and strengthened against radial collapse at the points 36. An annular channel 38 may be provided on the conically convex side 22 of the polymer ring to facilitate the radial collapsing and the flattening of the conical end wall 20.

A second annular groove 40 may be provided between the annular rib groove 34 such that the polymer ring may collapse radially between the mounting flange 16 and annular rib 32. The mounting flange 16 may project axially outwardly and radially outwardly from the conically convex side 22 to the conically concave side 24, as shown, to provide a barb-like structure facilitating insertion of the polymer bearing seal 10. An annular flange groove 42 may undercut such a mounting flange such that the mounting flange may collapse radially inwardly as a hinged flap.

A second annular seal lip 44 may be provided, extending from the radially inward portion 28 of the conical side wall 20 for engagement with the bearing inner ring 14 at a point axially outward of the curved surface 30 engaged by the first seal lip 26. The second annular seal lip 44 can have an angled surface contacting a radial step, as shown.

The first seal lip 26 may include an axial extension between the radially inner portion 28 of the side wall 20 and a rounded end surface, as shown. This forms a shape somewhat like a boot, with the toe portion providing the first seal lip 26, the heel portion providing the second seal lip 44 and the instep portion providing a lubricant space therebetween. Such a configuration, combined with the pivoting of the conical end wall 20 during installation, provides a radially outward camming engagement of the inner ring 14 by the first seal lip 26. This engagement resists deflection of the end wall 20 beyond a radial orientation and retaining the end wall 20 in position between the bearing outer ring 12 and bearing inner ring 14, keeping the seal from "blowing out" under pressure.

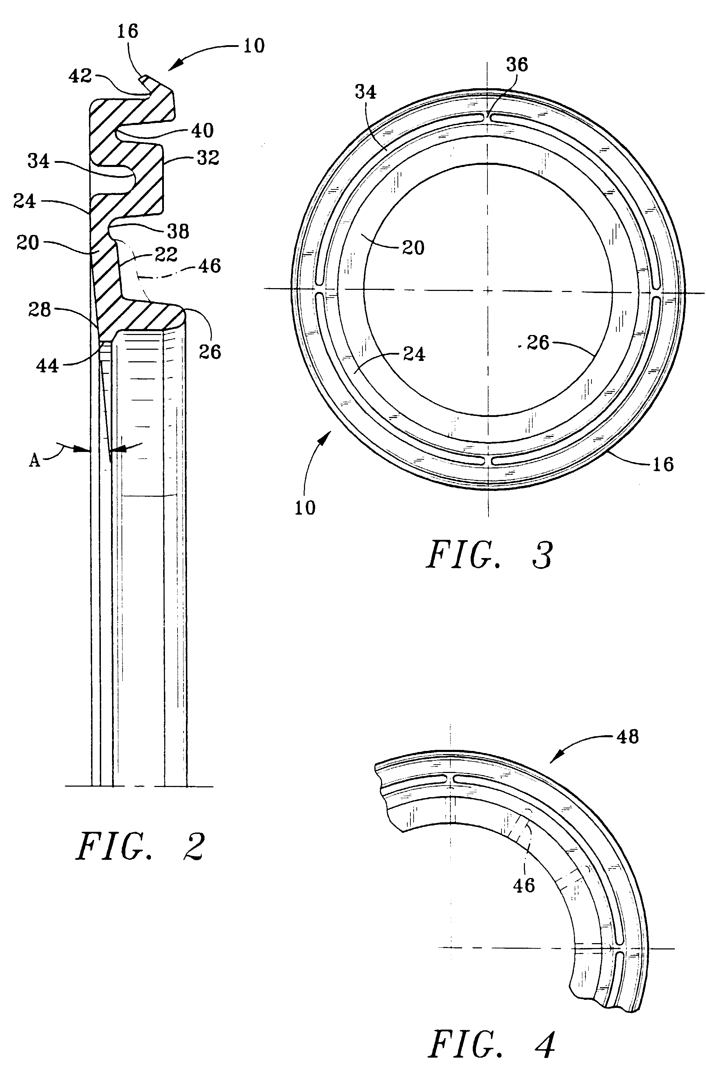

As illustrated in Figures 2 and 4, radial ribs 46 may be provided on a polymer bearing seal 48 between the end wall 20 and an axially extending first seal lip to serve as a gusset and provide additional stiffness and strength. Preferably, the polymer bearing seal 10 is made of a thermoplastic elastomer with fibre reinforcement. One example of a suitable polymer is DuPont Hytrel. Other polymers with suitable characteristics, including elasticity, may also be used.

The present polymer bearing seal uses maximum interference of the seal outer diameter relative to the outer ring seal groove inner diameter to provide sufficient retention. A negatively-angled configuration on the outer diameter and coring beneath the that configuration allow the seal to deflect radially until the seal has been pressed far enough to spring back to fully engage and fill the groove space. The configuration of the seal, including the relief between the first and second seal lips, provides for lip location changes due to manufacturing tolerances, temperature changes, ageing and wear.

## Claims

1. A polymer bearing seal (10) for insertion between an outer ring (12) and an inner ring (14) of a bearing, the seal comprising a polymer ring having a mounting flange (16) along the polymer ring's outer circumference for mounting engagement with a seal groove (18) of the outer ring (12) of the bearing, characterised in that the polymer ring has an annular end wall (20) extending radially inwardly and axially inwardly such that the end wall provides a conically convex side (22) to be directed toward an axial centre of the bearing and a conically concave side (24) to be directed away from the axial centre of the bearing, the polymer ring having an annular first seal lip (26) projecting from a radially inner portion (28) of the end wall (20) for engagement with an annular radially outwardly curved surface (30) of the inner ring (14) of the bearing after insertion of the seal into the bearing, and the polymer ring having an annular rib (32) located on the convex side (22) between the end wall (20) and the mounting flange (16), and an annular rib groove (34) on the concave side (24) opposite the annular rib (32), such that the polymer ring may collapse radially as the end wall is deflected axially outwardly to a more radial orientation.

2. A bearing seal according to claim 1, wherein the annular rib groove (34) has a depth greater than the axial thickness of the end wall (20) of the polymer ring and penetrates the annular rib (32).

3. A bearing seal according to claim 1 or 2, wherein the polymer ring has a second annular groove (40) between the rib groove (34) and the mounting flange (16) such that the polymer ring may collapse radially inwardly adjacent to the mounting flange.

4. A bearing seal according to claim 1, 2 or 3 wherein the annular rib groove (34) is interrupted at a plurality of points (36) along its circumference such that the annular rib (32) is strengthened against radial collapse at those points.

5. A bearing seal according to any one of the preceding claims, wherein the polymer ring has a second annular seal lip (44) for engagement with the bearing inner ring (14) axially outward of the annular radially outwardly curved surface (30) of the inner ring engaged by the first seal lip (26).

6. A bearing seal according to any one of the preceding claims, wherein the mounting flange (16) projects axially outwardly and radially outwardly from the conically concave side (24) to the conically convex side (22), and an annular flange groove (40) undercuts the mounting flange from the conically convex side, such that the mounting flange may collapse radially inwardly.

7. A bearing seal according to any one of the preceding claims, wherein the polymer ring is made of an elastic polymer such that the collapsing of the polymer ring radially is an elastic deformation resulting in a torque resistant mounting of the mounting flange (16) in the seal groove (18) of the outer ring (12) and a sealing force exerted by the first seal lip (26) against the annular radially outwardly curved surface (30) of the inner ring (14).

8. A polymer bearing seal according to any one of the preceding claims, wherein the seal lip (26) extends axially inwardly from the radially inner portion of the end wall (20) and radial ribs (46) gusset the axially inward extension of the seal lip with respect to the end wall.

9. A polymer bearing seal according to any one of the preceding claims, wherein the first seal lip (26) includes an axial extension between the radially inner portion (28) of the end wall (20) and a rounded end surface.

10. The polymer bearing seal according to any one of the preceding claims, wherein the polymer ring is made of a thermoplastic elastomer.

11. A sealed bearing comprising an outer ring (12) having a seal groove (18), an inner ring (14) having an annular radially outwardly curved surface, and a polymer bearing seal according to any one of the preceding claims, with the mounting flange (16) along the polymer ring's outer circumference resiliently engaging the seal groove of the outer ring with an interference fit, the polymer ring annular end wall (20) extending radially inwardly and axially inwardly to provide the conically convex side (24) directed toward an axial centre of the bearing and the conically concave side (24) directed away from the axial centre of the bearing, the polymer ring annular first seal lip (26) projecting from the radially inner portion (28) of the end wall into engagement with the annular radially outwardly curved surface (30) of the inner ring (14) of the bearing and the polymer ring being resiliently collapsed radially by engagement with the radially outwardly curved surface (30) of the inner ring such that the annular rib groove (34) is narrowed and the end wall (20) of the polymer ring is deflected to a more radial orientation.
